# FASCICULE DE BREVET EUROPEEN

(11) **EP 3 760 488 B1**
(45) Date de publication et mention de la délivrance du brevet: **09.12.2026**
(21) Numéro de dépôt: 20182781.3
(22) Date de dépôt: 29.06.2020
(51) Int. Cl.: B60R 13/04

(54) **ÉLÉMENT DE PIÈCE DE CARROSSERIE COMPORTANT UN ORIFICE RECOUVERT DE REVÊTEMENT PROTECTEUR**
ELEMENT EINES KAROSSERIETEILS, DAS EINE ÖFFNUNG MIT EINER SCHUTZABDECKUNG UMFASST
ELEMENT FOR BODY PART COMPRISING AN OPENING COVERED WITH A PROTECTIVE COATING

(30) Priorité: 03.07.2019 FR 1907422
(43) Date de publication de la demande: 06.01.2021
(73) Titulaire: OPmobility SE, 69007 Lyon (FR)
(72) Inventeur: BERGERON-VANHILLE, Aurélie, 01150 Sainte-Julie (FR); VIRELIZIER, François, 01150 Sainte-Julie (FR); VIDAL, Sophie, 01150 Sainte-Julie (FR); HELMREICH, Marc, 01150 Sainte-Julie (FR); TRESSE, David, 01150 Sainte-Julie (FR); STABLO, Frédéric, 01150 Sainte-Julie (FR)
(74) Mandataire: LLR

(56) Documents cités:
- EP-A1- 1 316 495
- EP-A2- 0 952 388
- WO-A2-00/51829
- US-A- 3 867 240

## Description

L'invention concerne le domaine des véhicules automobiles, et plus particulièrement le domaine de la fabrication d'un élément de pièce de carrosserie en matière plastique, destiné à être monté sur une pièce de carrosserie, et visible depuis l'extérieur du véhicule.

De nombreux véhicules modernes sont équipés d'éléments de carrosserie en matière plastique pouvant équiper par exemple un hayon arrière, un flanc de portière, des pare-chocs avant et arrière, un toit, etc.

Par exemple, on connaît des véhicules équipés de pièce de style destinée à contribuer à l'aspect général extérieur du véhicule. Ces pièces de style ont pour objet de rehausser une ligne de style ou de souligner une forme dans le but de renforcer l'image que le constructeur souhaite associer à sa marque ou à son modèle de véhicule.

A titre d'exemple, les baguettes chromées courant le long de la partie latérale du véhicule, les protections de bas de caisse, l'emblème de la marque, les enjoliveurs de poignées de porte, les coques de rétroviseurs sont ces pièces de style dont l'apparence fait l'objet d'un soin particulier de la part des concepteurs du véhicule. Par extension, toutes les pièces de la carrosserie visibles de l'extérieur et participant à l'aspect général du véhicule, telles qu'un ouvrant, un parechoc, une calandre, peuvent être considérées également comme des éléments de carrosserie ou des pièces de style entrant dans le champ d'application de l'invention.

De tels éléments de carrosserie sont fabriqués en matière plastique. Le choix de la matière plastique est guidé par la fonction et/ou l'utilisation de cet élément.

Certaines de ces matières plastiques se dégradent rapidement, par rapport à la durée de vie d'un véhicule, sous l'effet des conditions extérieures, c'est-à-dire les conditions environnementales telles que le rayonnement ultraviolet du soleil et l'humidité ambiante.

Par exemple, dans le cas où l'élément de pièce de carrosserie est réalisé en matière contenant du polycarbonate, il aura tendance à jaunir et à se fragiliser sous l'effet des rayons ultraviolets. Dans le cas où l'élément de pièce de carrosserie est réalisé en polyamide, il aura tendance à gonfler sous l'effet de l'humidité, et le trou aura donc tendance à se déformer.

Les éléments de carrosserie étant visibles depuis l'extérieur du véhicule, cette dégradation n'est pas acceptable pour un constructeur automobile.

Afin de protéger de tels éléments vis-à-vis des conditions extérieures, il est connu de protéger ces éléments par une couche de protection, permettant de limiter, voire de supprimer, les effets des conditions extérieures. Une telle couche de protection peut être réalisée en thermoplastique polyuréthane, ou en vernis.

Par exemple, on connaît des éléments de pièce de carrosserie transparents, comme les projecteurs avant, réalisés par exemple en polycarbonate, et recouvert d'une couche de thermoplastique polyuréthane ou de vernis.

Cependant, il peut être nécessaire après moulage de reprendre, en usinage de tels éléments afin de réaliser des orifices, par exemple pour le passage de fûts de fixation permettant de fixer une pièce sur l'élément ou l'élément sur une pièce.

Les parois de l'orifice, c'est-à-dire la surface interne de l'orifice, ne comportent pas de couche de protection, et sont alors exposées aux conditions extérieures, ce qui détériore la qualité du plastique. L'interface entre la matière plastique et la couche de protection est alors aussi particulièrement vulnérable. De plus, l'humidité peut alors s'infiltrer dans les aspérités créées lors de l'usinage, et altérer ainsi l'élément.

On connaît une solution consistant à appliquer un revêtement de protection sur la surface interne, au moyen d'un tampon applicateur. Ainsi, on appelle revêtement de protection un revêtement apte à protéger une couche de matière plastique des conditions environnementales : UV, humidité, ... On peut utiliser un revêtement du type vernis, ou une laque bi-composant. On peut également utiliser un primaire, similaire à celui utilisé préalablement à l'application d'un cordon de colle, d'un joint d'étanchéité, ou lors de l'étape de peinture d'une pièce de carrosserie.

Cependant, l'utilisation d'un tampon imbibé pour appliquer un revêtement de protection liquide à l'intérieur d'un orifice, conduit à la formation de bavures sur les deux faces de l'élément de pièce de carrosserie, ce qui n'est pas acceptable en termes de qualité.

En effet, il n'est pas acceptable de voir une bavure sur la face extérieure visible d'une pièce de carrosserie.

Par ailleurs, certains éléments de pièces de carrosserie sont également transparents à la lumière. De ce fait, des bavures présentes sur la face interne de l'élément sont visibles depuis l'extérieur du véhicule. On appelle « face interne » la face opposée à la face tournée vers l'extérieur du véhicule (face externe).

Une telle bavure sur la face interne est encore plus visible, lorsque, dans le but de renforcer l'effet produit par ces éléments de carrosserie transparent, une source lumineuse est placée en arrière de la surface de l'élément de pièce carrosserie formé d'un matériau transparent (présence d'un rétroéclairage).

La solution existante pour protéger la surface intérieure d'un orifice n'est donc pas admissible en termes d'aspect pour une pièce de carrosserie, d'autant plus pour une pièce transparente. Le document US 3 867 240 décrit un élément de pièce de carrosserie conforme au préambule de la revendication 1.

L'invention a notamment pour but de fournir un élément de pièce de carrosserie comprenant une paroi en matière plastique munie d'un orifice traversant, la surface intérieure de l'orifice étant revêtue d'un revêtement de protection, appliqué sans aucune bavure sur les faces de la paroi, ainsi qu'un procédé permettant de réaliser un tel élément.

A cet effet l'invention a pour objet un élément de pièce de carrosserie pour véhicule automobile selon la revendication 1.

L'élément de pièce de carrosserie peut en outre comporter l'une ou plusieurs des caractéristiques suivantes, prises seules ou en combinaison :
- la paroi est sensiblement transparente à la lumière ;
- la paroi comporte une couche plastique en matière plastique sensiblement transparente à la lumière et comportant une face externe tournée vers l'extérieur du véhicule lorsque l'élément est monté sur ce véhicule, et une face interne opposée à la face externe, la face externe étant recouverte d'une couche de protection sensiblement transparente à la lumière ;
- la matière plastique de la couche plastique est choisie seule ou en combinaison parmi les matières thermoplastiques suivantes : polypropylène naturel translucide, cyclo oléfines copolymères, polyéthylène, polyamide, polycarbonate, acrylonitrile butadiène styrène, mélange de polycarbonate, acrylonitrile butadiène styrène translucide, un mélange des deux, polystyrène, polyéthylène téréphtalate et polyméthacrylate de méthyle ;
- la couche de protection est réalisée dans une matière choisie parmi les matières suivantes : thermoplastique polyuréthane, un vernis ou laque bi-composant ;
- le revêtement de protection est un primaire ou une laque bi-composant.

L'invention concerne également un procédé de fabrication d'un élément de pièce de carrosserie selon l'invention, la couche plastique en matière plastique, comportant une face externe destinée à être tournée vers l'extérieur d'un véhicule lorsque l'élément est monté sur ce véhicule, et comportant une face interne opposée à la face externe, dans lequel on réalise les étapes suivantes :
a) moulage de la paroi en matière plastique ;
b) optionnellement, réalisation d'un marouflage, afin de masquer une zone de la face externe, la zone étant destinée à comporter l'orifice ;
c) réalisation de l'orifice traversant la paroi ;
d) optionnellement, utilisation d'un dispositif écran afin de masquer une zone de la face externe, la zone étant destinée à comporter l'orifice ou comportant l'orifice;
e) introduction d'un moyen applicateur, par exemple une buse, du revêtement de protection dans l'orifice;
f) application du revêtement de protection sur la surface interne de l'orifice au moyen du moyen applicateur.

Le procédé peut en outre comporter l'une ou plusieurs des caractéristiques suivantes, prises seules ou en combinaison :
- on réalise l'étape a) par moulage de la couche plastique, et en recouvrant sa face externe d'une couche de protection ;
- on réalise le marouflage à l'étape b) en déposant un film de masquage sur la face externe, le film de masquage étant troué lors de l'étape c) ;
- à l'étape d), on positionne un dispositif écran comportant un corps recouvrant les bords de l'orifice sur l'une des faces externe ou interne ;
- à l'étape d), on positionne de part et d'autre de l'orifice un dispositif écran, un premier dispositif écran comportant un corps recouvrant les bords de l'orifice sur la faces interne, un second dispositif écran comportant un corps recouvrant les bords de l'orifice sur la face externe, l'un des corps comportant en regard de l'orifice un logement d'introduction du moyen applicateur ;
- le dispositif écran comporte au moins un joint d'étanchéité avec l'élément réalisé en matière souple, telle que du silicone ;
- on réalise un nettoyage des faces de la paroi et de l'orifice après l'étape c) ;
- le moyen applicateur est une buse ;
- on réalise un séchage du revêtement de protection par pulvérisation d'air chaud au moyen de la buse.

### Brève description des figures

L'invention sera mieux comprise à la lecture de la description qui va suivre donnée uniquement à titre d'exemple et faite en se référant aux dessins annexés dans lesquels :
[Fig. 1] La figure 1 est une vue en perspective de la face avant d'un véhicule automobile comprenant un dispositif de protection d'un radar selon un mode de réalisation de l'invention.
[Fig. 2] la figure 2 illustre, en section, un exemple d'un élément de pièce de carrosserie selon l'invention.
[Fig. 3] la figure 3 illustre, en section, les trois étapes principales d'un exemple de procédé de fabrication d'un élément de pièce de carrosserie selon l'invention.

### Description détaillée

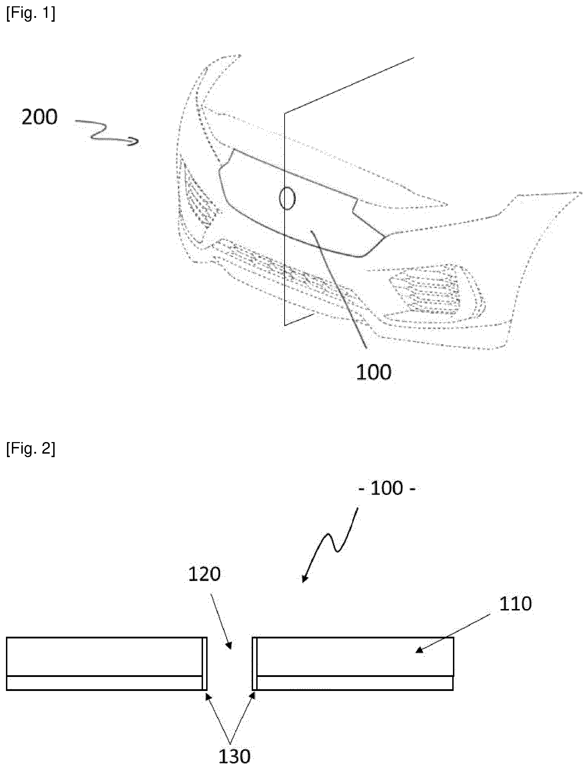

La figure 1 représente, à titre illustratif et non limitatif, un élément 100 de pièce de carrosserie 200 en position sur la face avant d'un véhicule.

La figure 2 représente, à titre illustratif et non limitatif, un exemple d'un élément 100 de pièce de carrosserie conforme à l'invention. L'élément 100 de pièce de carrosserie comprend au moins une paroi 110 en matière plastique.

La paroi 110 comporte un orifice 120 traversant la paroi 110, et la surface intérieure de l'orifice est revêtue d'un revêtement de protection 130 contre les UV et/ou l'humidité.

Le revêtement de protection 130 revêtant la surface intérieure 122 de l'orifice 120 ne déborde pas en dehors de l'orifice 120.

On appelle surface interne 122 de l'orifice 120, la surface formant la tranche de l'orifice sur toute l'épaisseur de la paroi 110.

On entend par « revêtement de protection » un revêtement applicable en fine couche (épaisseur inférieure à 1mm), et apte à protéger une couche de matière plastique des conditions environnementales : UV, humidité, ... Le spécialiste connaît des revêtements aptes à remplir cette fonction. On peut par exemple utiliser un revêtement du type vernis, ou une laque bi-composant. On peut également utiliser un primaire, similaire à celui utilisé préalablement à l'application d'un cordon de colle ou d'un joint d'étanchéité, ou lors de l'étape de peinture d'une pièce de carrosserie. On appelle primaire un revêtement ayant pour fonction de favoriser l'accroche d'un autre revêtement sur une pièce. Par exemple, un primaire permet d'améliorer l'adhérence de la couche de couleur lors d'un procédé de peinture, tel que pour la peinture des pièces de carrosserie extérieure. Dans le cas d'une protection contre les conditions extérieures, le primaire est utilisé non pour cette fonction d'adhérence, puisqu'il n'est pas recouvert par un autre revêtement, mais pour sa fonction anti-UV, et résistance à l'eau. Ainsi, selon un mode de réalisation, la surface intérieure 122 de l'orifice 120 est revêtue d'un revêtement de protection 130 du type primaire.

On peut utiliser un primaire ayant la composition suivante : un composé de résine polyuréthane mono ou bi composants ; des charges conductrices du type noir de carbone ; et un solvant organique du type xylène, acétate de butyle, acétate de butyle glycol... Le primaire peut également comporter un solvant à base d'eau, d'éther de glycol et/ou de pyrrolidone.

Comme illustré sur l'exemple de la figure 2, la paroi 110 comporte une couche plastique 140 en matière thermoplastique recouverte d'une couche de protection 150.

Selon un exemple la couche de protection 150 a une épaisseur comprise entre 0,3 et 0,8mm, et la couche plastique 140 a une épaisseur comprise entre 3 et 6mm.

Selon un mode de réalisation, la paroi 110 est sensiblement transparente à la lumière, c'est-à-dire qu'au moins une partie d'un flux lumineux dirigé vers la paroi 110, traverse la paroi 110.

Selon ce mode de réalisation, la couche plastique 140 et la couche de protection 150 sont sensiblement transparentes à la lumière.

La matière plastique de la couche plastique 140 est choisie parmi les matières thermoplastiques suivantes : polypropylène naturel translucide, cyclo oléfines copolymères (COC), polyéthylène (PE), polyamide (PA), polycarbonate (PC), acrylonitrile butadiène styrène (ABS), mélange de polycarbonate (PC), acrylonitrile butadiène styrène translucide (ABS), un mélange des deux (ABS/PC), polystyrène (PS), polyéthylène téréphtalate (PET) et polyméthacrylate de méthyle (PMMA).

La couche de protection 150 est réalisée dans une matière choisie parmi les matières suivantes : thermoplastique polyuréthane (TPU), vernis, ou laque bi-composant.

La couche plastique 140 comporte deux faces : une face interne 144 et une face externe 142. Lorsque l'élément 100 est monté sur un véhicule, la face interne 144 est la face tournée vers l'intérieur du véhicule, et la face externe, opposée à la face interne, est tournée vers l'extérieur du véhicule. La couche de protection 150 recouvre la face externe 142.

Ainsi, lorsque la couche plastique 140 est opaque, et la couche de protection 150 est transparente, seule la face externe 144 de la couche plastique 140 est visible depuis l'extérieur du véhicule.

Selon l'invention, le revêtement de protection 130 revêtant la surface intérieure 122 de l'orifice 120 ne déborde pas en dehors de l'orifice 120. Ainsi, la face externe 142 ne comporte pas de revêtement de protection 130, c'est-à-dire que le revêtement de protection 130 est disposé uniquement sur les surfaces internes 122 de l'orifice 120. La face externe 142 ne comporte donc aucune bavure de ce revêtement 130. Ainsi, l'aspect extérieur de l'élément 100 n'est pas altéré par la présence d'un revêtement de protection 130 dans l'orifice 120.

De façon avantageuse, essentiellement lorsque la paroi 110 est sensiblement transparente, la face interne 144 ne comporte pas non plus de revêtement de protection 130, donc aucune bavure de ce revêtement 130. Ainsi, l'aspect extérieure de l'élément 100 n'est pas altéré par la présence d'un revêtement de protection 130 dans l'orifice 120, même si la paroi 110 est transparente, voire rétroéclairée.

Selon un mode de réalisation, l'élément 100 de pièce de carrosserie constitue un radôme pour radar de véhicule automobile.

L'invention concerne également un procédé de fabrication d'un élément 100 de pièce de carrosserie selon l'invention.

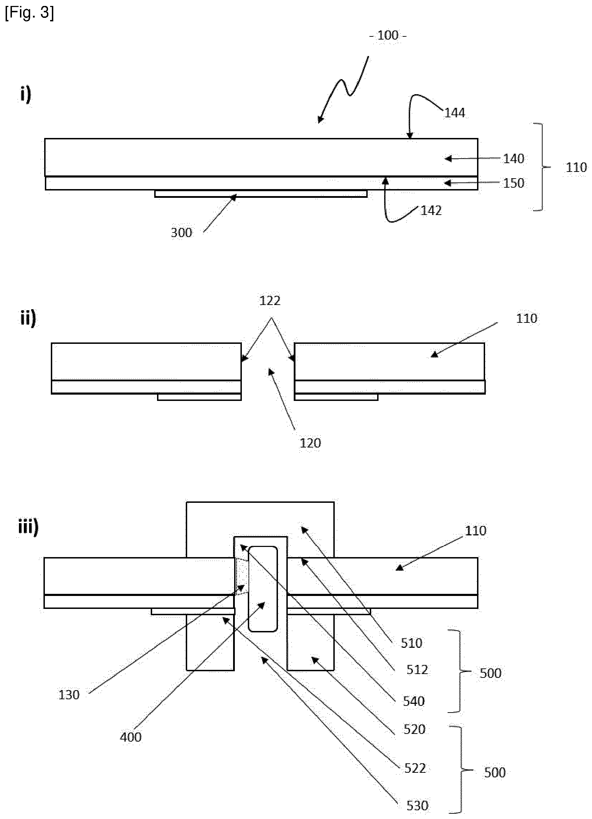

La figure 3 illustre les étapes principales d'un exemple d'un tel procédé, dans lequel on réalise les étapes suivantes :
a) moulage, de préférence par injection, de la paroi 110 en matière plastique ;
b) optionnellement, on réalise un marouflage afin de masquer une zone de la face externe 142, la zone étant destinée à comporter l'orifice 120 ;
c) réalisation de l'orifice 120 traversant la paroi 110, par exemple par perçage ou fraisage ;
d) optionnellement, on utilise un dispositif écran 500 afin de masquer une zone de la face externe 142, la zone étant destinée à comporter l'orifice 120 ou comportant l'orifice 120 ;
e) introduction d'un moyen applicateur 400, par exemple une buse, du revêtement de protection 130 dans l'orifice 120 ;
f) application du revêtement de protection 130 sur la surface interne de l'orifice 120 au moyen du moyen applicateur 400.

L'étape d) peut être réalisée après l'étape b) ou après l'étape c). Dans le cas où elle est réalisée après l'étape b), le dispositif écran 500 est utilisé pour masquer une zone de la face externe 142 destinée à comporter l'orifice 120. Dans le cas où elle est réalisée après l'étape c), le dispositif écran 500 est utilisé pour masquer une zone de la face externe 142 comportant l'orifice 120.

On appelle zone destinée à comporter l'orifice 120, une zone d'une face (externe 142 ou interne 144) comportant l'emplacement de l'orifice traversant la paroi 110.

Selon un mode réalisation au cours de l'étape a), on réalise par moulage (de préférence par injection) la couche plastique 140, et on recouvre sa face externe 142 d'une couche de protection 150, de préférence par une opération de surmoulage de la couche plastique 140.

On appelle marouflage la dépose d'un film de masquage 300. Selon un mode de réalisation, on réalise le marouflage de l'étape b) en déposant un film de masquage 300 sur la face externe 142. Cette étape est illustrée sur la première figure de la figure 3 : référence i).

Le film de masquage 300 étant posé avant l'étape de réalisation de l'orifice 120, le film de masquage 300 est donc troué au cours de l'étape c), comme l'illustre la seconde figure de la figure 3 : figure ii). De préférence, la réalisation de l'orifice est effectuée en démarrant le perçage depuis la face présentant le film de masquage 300 de marouflage.

Selon un mode de réalisation, essentiellement lorsque la paroi 110 est sensiblement transparente à la lumière, on réalise entre l'étape c) et l'étape d) un second marouflage d'une zone de la face interne 144. On peut utiliser la même façon de procéder : on réalise ce second marouflage en déposant un film de masquage 300 sur la face interne 144. Cette étape n'est pas illustrée sur les figures.

Selon un mode de réalisation préférentiel, on évite toute bavure du revêtement de protection 130 sur l'une des faces 142 et 144, en utilisant alternativement ou en complément du marouflage, au moins un dispositif écran 500. Ce dispositif écran 500 peut avoir la forme d'un dôme.

Un dispositif écran 500 comporte un corps entourant les bords de l'orifice 120 sur la face interne 144 ou sur la face externe 142.

Sur les figures, le corps 510 entoure les bords de l'orifice 120 sur la face interne 144, et le corps 520 entoure les bords de l'orifice 120 sur la face externe 142.

Chaque corps 510, 520 peut avoir la forme d'un dôme, et comporte de préférence un joint d'étanchéité 512, 522, en contact avec l'élément 100. Ces joints sont réalisés en matière souple, telle que du silicone, afin d'assurer un écran étanche vis-à-vis des projections du revêtement de protection 130, et ainsi préserver les faces 142 et 144 de toutes bavures ou résidus d'application.

L'un des corps, le corps 520 sur la figure 3, comporte, en regard de l'orifice 120, un logement 530, permettant l'introduction du moyen applicateur 400 dans l'orifice 120. L'autre corps, le corps 510 sur la figure 3, peut comporter un évidement 540 en regard de l'orifice 120 apte à permettre la course d'introduction du moyen applicateur 400 au-delà de la face 144.

Selon un mode de réalisation, à l'étape d), on positionne un seul dispositif écran 500 : le corps 510 ou le corps 520. Selon un autre mode de réalisation, on position deux dispositifs écrans de part et d'autre de l'orifice 120 : le corps 510 et le corps 520.

De façon avantageuse, on réalise un nettoyage des faces 142, 144 de la paroi 110 et de l'orifice 120 après l'étape c) de réalisation de l'orifice 120.

Lorsque le moyen applicateur 400 est une buse, on peut réaliser un séchage du revêtement de protection 130 par pulvérisation d'air chaud au moyen de la buse. Ce séchage évite que des bavures n'apparaissent après application du revêtement 130, par exemple pendant la manipulation de la pièce immédiatement après dépose de la protection. De plus, ce séchage permet de nettoyer la buse et éviter que le primaire/vernis ne sèche et obstrue les canaux d'alimentation/éjection de la buse.

### Liste de références

- 100 :: élément de pièce de carrosserie 200
- 110 :: paroi de l'élément 100 de pièce de carrosserie
- 120 :: orifice traversant de la paroi 110
- 122 :: surface intérieure de l'orifice 120
- 130 :: revêtement de protection contre les UV et/ou l'humidité
- 140 :: couche plastique de la paroi 110, en matière plastique sensiblement transparente à la lumière
- 142 :: face externe de la couche 140
- 144 :: face interne de la couche 140
- 150 :: couche de protection de la paroi 110, sensiblement transparente à la lumière visible
- 200 :: pièce de carrosserie pour véhicule automobile
- 300 :: film de masquage de la paroi 110
- 400 :: moyen applicateur du revêtement de protection 130
- 500 :: dispositif écran (dôme permettant un marouflage optimisé
- 510 :: corps d'un dispositif écran 500 recouvrant les bords de l'orifice 120 sur la face interne 144 de la paroi 110
- 512 :: joint d'étanchéité du corps 510
- 520 :: corps d'un dispositif écran 500 recouvrant les bords de l'orifice 120 sur la face externe 142 de la paroi 110
- 522 :: joint d'étanchéité du second élément 520
- 530 :: logement dans le premier ou le second corps 510, 520
- 540 :: évidement dans le premier ou le second corps 510, 520

## Revendications

1. Elément (100) de pièce de carrosserie (200) pour véhicule automobile, comprenant au moins une paroi (110) en matière plastique, la paroi (110) comportant un orifice (120) traversant la paroi (110), la surface intérieure (122) de l'orifice (120) étant revêtue d'un revêtement de protection (130) contre les UV et/ou l'humidité, **caractérisé en ce que** le revêtement de protection (130) revêtant la surface intérieure (122) de l'orifice (120) ne déborde pas en dehors de l'orifice (120).

2. Elément (100) de pièce de carrosserie selon la revendication 1, dans lequel la paroi (110) est sensiblement transparente à la lumière.

3. Elément (100) de pièce de carrosserie selon la revendication précédente, dans lequel la paroi (110) comporte une couche plastique (140) en matière plastique sensiblement transparente à la lumière et comportant une face externe (142) tournée vers l'extérieur du véhicule lorsque l'élément (100) est monté sur ce véhicule, et une face interne (144) opposée à la face externe (142), la face externe (142) étant recouverte d'une couche de protection (150) sensiblement transparente à la lumière.

4. Elément (100) de pièce de carrosserie selon la revendication précédente, dans lequel la matière plastique de la couche plastique (140) est choisie seule ou en combinaison parmi les matières thermoplastiques suivantes : polypropylène naturel translucide, cyclo oléfines copolymères (COC), polyéthylène (PE), polyamide (PA), polycarbonate (PC), acrylonitrile butadiène styrène (ABS), mélange de polycarbonate (PC), acrylonitrile butadiène styrène translucide (ABS), un mélange des deux (ABS/PC), polystyrène (PS), polyéthylène téréphtalate (PET) et polyméthacrylate de méthyle (PMMA).

5. Élément (100) de pièce de carrosserie selon la revendication précédente, dans lequel la couche de protection (150) est réalisée dans une matière choisie parmi les matières suivantes : thermoplastique polyuréthane (TPU), un vernis ou laque bi-composant.

6. Elément (100) de pièce de carrosserie selon l'une des revendications précédentes, dans lequel le revêtement de protection (130) est un primaire ou une laque bi-composant.

7. Procédé de fabrication d'un élément (100) de pièce de carrosserie selon l'une des revendications 1 à 6, la couche plastique (140) en matière plastique, comportant une face externe (142) destinée à être tournée vers l'extérieur d'un véhicule lorsque l'élément (110) est monté sur ce véhicule, et comportant une face interne (144) opposée à la face externe (142), **caractérisé en ce que** l'on réalise les étapes suivantes :
a) moulage de la paroi (110) en matière plastique ;
b) optionnellement, réalisation d'un marouflage, afin de masquer une zone de la face externe (142), la zone étant destinée à comporter l'orifice (120) ;
c) réalisation de l'orifice (120) traversant la paroi (110) ;
d) optionnellement, utilisation d'un dispositif écran (500) afin de masquer une zone de la face externe (142), la zone étant destinée à comporter l'orifice (120) ou comportant l'orifice (120) ;
e) introduction d'un moyen applicateur (400), par exemple une buse, du revêtement de protection (130) dans l'orifice (120) ;
f) application du revêtement de protection (130) sur la surface interne de l'orifice (120) au moyen du moyen applicateur (400).

8. Procédé de fabrication selon la revendication précédente, dans lequel on réalise l'étape a) par moulage de la couche plastique (140), et en recouvrant sa face externe (142) d'une couche de protection (150).

9. Procédé de fabrication selon l'une des revendications 7 et 8, dans lequel on réalise le marouflage à l'étape b) en déposant un film de masquage (300) sur la face externe (142), le film de masquage (300) étant troué lors de l'étape c).

10. Procédé de fabrication selon la revendication précédente, dans lequel, à l'étape d), on positionne un dispositif écran (500) comportant un corps (520, 510) recouvrant les bords de l'orifice (120) sur l'une des faces externe (142) ou interne (144).

11. Procédé de fabrication selon la revendication 9, dans lequel, à l'étape d), on positionne de part et d'autre de l'orifice (120) un dispositif écran (500), un premier dispositif écran (500) comportant un corps (510) recouvrant les bords de l'orifice (120) sur la faces interne (144), un second dispositif écran (500) comportant un corps (520) recouvrant les bords de l'orifice (120) sur la face externe (142), l'un des corps (510, 520) comportant en regard de l'orifice (120) un logement (530) d'introduction du moyen applicateur (400 dans l'orifice (120).

12. Procédé de fabrication selon la revendication précédente, dans lequel le dispositif écran (500) comporte au moins un joint d'étanchéité (512, 522) avec l'élément (100) réalisé en matière souple, telle que du silicone.

13. Procédé de fabrication selon l'une des revendications 7 à 12, dans lequel on réalise un nettoyage des faces (142, 144) de la paroi (110) et de l'orifice (120) après l'étape c).

14. Procédé de fabrication selon l'une des revendications 7 à 13, dans lequel le moyen applicateur (400) est une buse.

15. Procédé de fabrication selon la revendication précédente, dans lequel on réalise un séchage du revêtement de protection (130) par pulvérisation d'air chaud au moyen de la buse.

## Patentansprüche

1. Element (100) eines Karosseriebauteils (200) für ein Kraftfahrzeug, aufweisend mindestens eine Wand (110) aus Kunststoff, wobei die Wand (110) eine sie durchsetzende Öffnung (120) aufweist und die Innenfläche (122) der Öffnung (120) mit einer Schutzbeschichtung (130) gegen UV-Strahlung und/oder Feuchtigkeit versehen ist, **dadurch gekennzeichnet, dass** die auf die Innenfläche (122) der Öffnung (120) aufgebrachte Schutzbeschichtung (130) nicht über die Öffnung (120) hinausreicht.

2. Element (100) eines Karosseriebauteils nach Anspruch 1, wobei die Wand (110) für Licht im Wesentlichen durchlässig ist.

3. Element (100) eines Karosseriebauteils nach Anspruch 2, wobei die Wand (110) eine Kunststoffschicht (140) aus einem für Licht im Wesentlichen durchlässigen Kunststoff aufweist, die eine Außenseite (142), welche bei am Fahrzeug montiertem Element (100) zur Außenseite des Fahrzeugs weist, und eine der Außenseite (142) gegenüberliegende Innenseite (144) aufweist, wobei die Außenseite (142) mit einer für Licht im Wesentlichen durchlässigen Schutzschicht (150) bedeckt ist.

4. Element (100) eines Karosseriebauteils nach Anspruch 3, wobei der Kunststoff der Kunststoffschicht (140) einzeln oder in Kombination aus den folgenden thermoplastischen Materialien ausgewählt ist: naturfarbenes, transluzentes Polypropylen, Cycloolefin-Copolymere (COC), Polyethylen (PE), Polyamid (PA), Polycarbonat (PC), Acrylnitril-Butadien-Styrol (ABS), eine Mischung aus Polycarbonat (PC), transluzentes Acrylnitril-Butadien-Styrol (ABS), eine Mischung aus beiden (ABS/PC), Polystyrol (PS), Polyethylenterephthalat (PET) und Polymethylmethacrylat (PMMA).

5. Element (100) eines Karosseriebauteils nach Anspruch 4, wobei die Schutzschicht (150) aus einem Material hergestellt ist, das ausgewählt ist aus thermoplastischem Polyurethan (TPU), einem Zweikomponenten-Klarlack oder einem Zweikomponenten-Lack.

6. Element (100) eines Karosseriebauteils nach einem der vorhergehenden Ansprüche, wobei die Schutzbeschichtung (130) eine Grundierung oder ein Zweikomponenten-Lack ist.

7. Verfahren zur Herstellung eines Elements (100) eines Karosseriebauteils nach einem der Ansprüche 1 bis 6, wobei die Kunststoffschicht (140) aus Kunststoff eine Außenseite (142), die bei am Fahrzeug montiertem Element (110) zur Außenseite des Fahrzeugs weisen soll, und eine der Außenseite (142) gegenüberliegende Innenseite (144) aufweist, **dadurch gekennzeichnet, dass** die folgenden Schritte durchgeführt werden:
a) Formen der Wand (110) aus Kunststoff;
b) gegebenenfalls Abkleben eines Bereichs der Außenseite (142), in dem die Öffnung (120) vorgesehen ist;
c) Herstellen der die Wand (110) durchsetzenden Öffnung (120);
d) gegebenenfalls Verwenden einer Abschirmvorrichtung (500), um einen Bereich der Außenseite (142) abzudecken, in dem die Öffnung (120) vorgesehen ist oder der die Öffnung (120) aufweist;
e) Einführen eines Auftragsmittels (400) für die Schutzbeschichtung (130), beispielsweise einer Düse, in die Öffnung (120);
f) Aufbringen der Schutzbeschichtung (130) auf die Innenfläche der Öffnung (120) mittels des Auftragsmittels (400).

8. Herstellungsverfahren nach Anspruch 7, wobei Schritt a) durch Formen der Kunststoffschicht (140) und Bedecken ihrer Außenseite (142) mit einer Schutzschicht (150) durchgeführt wird.

9. Herstellungsverfahren nach Anspruch 7 oder 8, wobei das Abkleben in Schritt b) durch Aufbringen einer Abdeckfolie (300) auf die Außenseite (142) erfolgt und die Abdeckfolie (300) in Schritt c) durchlocht wird.

10. Herstellungsverfahren nach Anspruch 9, wobei in Schritt d) eine Abschirmvorrichtung (500) angeordnet wird, die einen Körper (520, 510) aufweist, welcher die Ränder der Öffnung (120) auf der Außenseite (142) oder der Innenseite (144) abdeckt.

11. Herstellungsverfahren nach Anspruch 9, wobei in Schritt d) beiderseits der Öffnung (120) jeweils eine Abschirmvorrichtung (500) angeordnet wird, wobei eine erste Abschirmvorrichtung (500) einen Körper (510) aufweist, der die Ränder der Öffnung (120) auf der Innenseite (144) abdeckt, und eine zweite Abschirmvorrichtung (500) einen Körper (520) aufweist, der die Ränder der Öffnung (120) auf der Außenseite (142) abdeckt, wobei einer der Körper (510, 520) gegenüber der Öffnung (120) eine Aufnahme (530) zum Einführen des Auftragsmittels (400) in die Öffnung (120) aufweist.

12. Herstellungsverfahren nach Anspruch 11, wobei die Abschirmvorrichtung (500) mindestens eine Dichtung (512, 522) gegenüber dem Element (100) aufweist, die aus einem flexiblen Material, beispielsweise Silikon, hergestellt ist.

13. Herstellungsverfahren nach einem der Ansprüche 7 bis 12, wobei nach Schritt c) die Seiten (142, 144) der Wand (110) und die Öffnung (120) gereinigt werden.

14. Herstellungsverfahren nach einem der Ansprüche 7 bis 13, wobei das Auftragsmittel (400) eine Düse ist.

15. Herstellungsverfahren nach Anspruch 14, wobei die Schutzbeschichtung (130) durch Versprühen von Heißluft mittels der Düse getrocknet wird.

## Claims

1. An element (100) of a bodywork part (200) for a motor vehicle, comprising at least one wall (110) made of plastic material, the wall (110) comprising an orifice (120) passing through the wall (110), the inner surface (122) of the orifice (120) being coated with a protective coating (130) against UV radiation and/or moisture, **characterised in that** the protective coating (130) coating the inner surface (122) of the orifice (120) does not extend beyond the orifice (120).

2. The element (100) of a bodywork part according to claim 1, wherein the wall (110) is substantially transparent to light.

3. The element (100) of a bodywork part according to the preceding claim, wherein the wall (110) comprises a plastic layer (140) made of plastic material substantially transparent to light and comprising an outer face (142) intended to face the outside of the vehicle when the element (100) is mounted on the vehicle, and an inner face (144) opposite the outer face (142), the outer face (142) being covered with a protective layer (150) substantially transparent to light.

4. The element (100) of a bodywork part according to the preceding claim, wherein the plastic material of the plastic layer (140) is selected, alone or in combination, from the following thermoplastic materials: translucent natural polypropylene, cyclo-olefin copolymers (COC), polyethylene (PE), polyamide (PA), polycarbonate (PC), acrylonitrile butadiene styrene (ABS), a mixture of polycarbonate (PC), translucent acrylonitrile butadiene styrene (ABS), a mixture of the two (ABS/PC), polystyrene (PS), polyethylene terephthalate (PET) and polymethyl methacrylate (PMMA).

5. The element (100) of a bodywork part according to the preceding claim, wherein the protective layer (150) is made of a material selected from the following materials: thermoplastic polyurethane (TPU), a varnish or a two-component lacquer.

6. The element (100) of a bodywork part according to any one of the preceding claims, wherein the protective coating (130) is a primer or a two-component lacquer.

7. A method of manufacturing an element (100) of a bodywork part according to any one of claims 1 to 6, the plastic layer (140) being made of plastic material and comprising an outer face (142) intended to face the outside of a vehicle when the element (110) is mounted on the vehicle, and an inner face (144) opposite the outer face (142), **characterised in that** the following steps are carried out:
a) moulding the wall (110) made of plastic material;
b) optionally, carrying out a masking operation in order to mask an area of the outer face (142), the area being intended to comprise the orifice (120);
c) forming the orifice (120) passing through the wall (110);
d) optionally, using a shielding device (500) to mask an area of the outer face (142), the area being intended to comprise the orifice (120) or comprising the orifice (120);
e) introducing an applicator means (400), for example a nozzle, for the protective coating (130) into the orifice (120);
f) applying the protective coating (130) to the inner surface of the orifice (120) by means of the applicator means (400).

8. The method of manufacture according to the preceding claim, wherein step a) is carried out by moulding the plastic layer (140) and covering its outer face (142) with a protective layer (150).

9. The method of manufacture according to either one of claims 7 and 8, wherein the masking operation in step b) is carried out by depositing a masking film (300) on the outer face (142), the masking film (300) being perforated during step c).

10. The method of manufacture according to the preceding claim, wherein, in step d), a shielding device (500) is positioned, comprising a body (520, 510) covering the edges of the orifice (120) on one of the outer face (142) or the inner face (144).

11. The method of manufacture according to claim 9, wherein, in step d), a shielding device (500) is positioned on either side of the orifice (120), a first shielding device (500) comprising a body (510) covering the edges of the orifice (120) on the inner face (144), a second shielding device (500) comprising a body (520) covering the edges of the orifice (120) on the outer face (142), one of the bodies (510, 520) comprising, facing the orifice (120), a housing (530) for introducing the applicator means (400) into the orifice (120).

12. The method of manufacture according to the preceding claim, wherein the shielding device (500) comprises at least one sealing joint (512, 522) with the element (100), made of a flexible material, such as silicone.

13. The method of manufacture according to any one of claims 7 to 12, wherein the faces (142, 144) of the wall (110) and the orifice (120) are cleaned after step c).

14. The method of manufacture according to any one of claims 7 to 13, wherein the applicator means (400) is a nozzle.

15. The method of manufacture according to the preceding claim, wherein the protective coating (130) is dried by spraying hot air by means of the nozzle.
